# EUROPÄISCHE PATENTSCHRIFT

(11) **EP 3 763 553 B1**
(45) Veröffentlichungstag und Bekanntmachung des Hinweises auf die Patenterteilung: **23.02.2022**
(21) Anmeldenummer: 20181594.1
(22) Anmeldetag: 23.06.2020
(51) Int. Cl.: B60J 5/06, B60J 7/10, A44B 11/12, B60P 7/08

(54) **SEITENPLANENSPANNER**
SIDE TARPAULIN TENSIONER
TENDEUR POUR BÂCHES LATÉRALES

(30) Priorität: 08.07.2019 DE 102019118335
(43) Veröffentlichungstag der Anmeldung: 13.01.2021
(73) Patentinhaber: Franz Miederhoff oHG, 59846 Sundern (DE)
(72) Erfinder: Papenheim, Josef, 59846 Sundern (DE)
(74) Vertreter: Patentanwälte Dörner & Kötter PartG mbB

(56) Entgegenhaltungen:
- EP-A1- 3 453 547
- EP-A2- 3 117 734
- DE-U1-202015 101 671

## Beschreibung

Die Erfindung betrifft einen Seitenplanenspanner, insbesondere zum Spannen von Planen eines Nutzfahrzeugaufbaus, nach dem Oberbegriff des Patentanspruchs 1.

Ein Seitenplanenspanner der vorgenannten Art ist in der EP 3 435 547 A1 beschrieben. Dieser besteht aus einem, einen U-förmigen Querschnitt aufweisenden Spannhebel, der über einen Schwenkbolzen schwenkbar mit den Seitenwangen eines Grundkörpers verbunden ist. Der Grundkörper weist eine zwischen den Seitenwangen angeordnete Vorderwange auf, die der Aufnahme einer Gewindebolzen-Muttern-Kombination dient, deren Gewindebolzen durch eine Durchführung eines Haltebolzens durchführbar ist, der an einer zu spannenden Plane festlegbar ist. An dem Spannhebel ist ein Haken schwenkbar befestigt. Der Haken kann hinter einem Schenkel des Rahmenprofils eines Nutzfahrzeuges eingehängt werden und dient als Widerlager. In seiner offenen Stellung befindet sich der Spannhebel in einer vollständig aufgeschwenkten Stellung. In dieser Stellung wird der Haken an einem Schenkel des Rahmenprofils eingehängt. Beim Schließen des Spannhebels erfolgt eine gegeneinander gerichtete Relativbewegung zwischen dem an dem Spannhebel angelenkten Haken und dem mit der Gewindestange verbundenen, an der Plane befestigten Block, so dass die Plane im Zuge dieser Bewegung gespannt wird. Um ein ungewolltes Öffnen des Spannhebels zu vermeiden sind an die Seitenwangen Nasen angeformt, die in dieser geschlossenen jeweils eine an den Grundkörper angeformte Federzunge hintergreifen.

Seitenplanenspanner der vorgenannten Art haben sich in der Praxis bewährt. Es hat sich jedoch gezeigt, dass die Rastverbindung zwischen Nasen und Federzungen insbesondere bei neuen Seitenplanenspannern manchmal schwer zu lösen sind. Darüber hinaus besteht die Gefahr einer Ermüdung der an den Grundkörper angeformten Federzungen bei fortschreitendem Gebrauch.

Vor diesem Hintergrund liegt der Erfindung die Aufgabe zugrunde, einen Seitenplanenspanner bereitzustellen, der eine verbesserte Sicherung vor selbsttätigem Öffnen aufweist. Gemäß dieser Erfindung wird diese Auflage durch einen Seitenplanenspanner mit den Merkmalen des kennzeichnenden Teils des Patentanspruchs 1 gelöst.

Mit der Erfindung ist ein Seitenplanenspanner bereitgestellt, der eine verbesserte Sicherung vor selbsttätigem Öffnen aufweist. Dadurch, dass wenigstens ein Rastelement durch eine an dem Spannbügel angeordnete Federspange gebildet ist, die in wenigstens eine an dem Grundkörper angeordnete Rastaufnahme einrastbar ist, ist eine zuverlässige Rastverbindung gewährleistet.

In Weiterbildung der Erfindung ist die Federspange lösbar mit dem Spannbügel verbunden. Hierdurch ist ein einfacher Austausch einer defekten oder ermüdeten Federspange ermöglicht.

In Ausgestaltung der Erfindung weist die Federspange an ihren beiden Schenkeln eine U-förmige Ausformung auf, die jeweils mit einer an dem Grundkörper angeordneten Rastaufnahme verrastbar ist. Hierdurch ist eine Vorspannwirkung in Richtung der Rastaufnahme erzielt.

In weiterer Ausgestaltung der Erfindung greifen die freien Enden der U-förmigen Ausformungen jeweils in eine an dem Spannbügel angeordnete Öse ein. Hierdurch ist eine einfache Montage der Federspange ermöglicht.

In Weiterbildung der Erfindung ist der die beiden Schenkel der Federspange verbindende Querbügel nach außen gewölbt ausgebildet. Hierdurch ist eine Aufhebung der Vorspannung der U-förmigen Ausformungen durch eine Kraft auf den Querbügel ermöglicht. Vorzugsweise ist die Federspange derart ausgebildet, dass der nach außen gewölbte Querbügel über den Spannbügel hervorragt.

In Ausgestaltung der Erfindung sind die U-förmigen Ausformungen jeweils durch eine Abwinklung mit einem Schenkel der Federspange verbunden. Hierdurch ist eine Positionierung der U-förmigen Ausformungen nahe am Übergang zu den Schenkeln in der Rastaufnahme ermöglicht, wodurch eine hohe Vorspannung erzielbar ist. Bevorzugt begrenzt die Abwinklung einen Winkel von zwischen 15° und 25°, insbesondere einen Winkel von zwischen 17° und 23°. Alternativ kann die Abwinklung (83) auch U-förmig ausgebildet und an dem Schenkel (81) im Wesentlichen rechtwinklig angestellt sein.

Erfindungsgemäß ist an dem Grundkörper eine Vorderwange zur Aufnahme eines Befestigungsmittels zur Verbindung mit einer Plane angeordnet und das wenigstens eine zweite, als Rastaufnahme ausgebildete Rastelement ist durch eine in der Vorderwange angeordnete Nut gebildet. Hierdurch ist eine orthogonal zur Ausformung der Federspange ausgerichtete Rastaufnahme erzielt.

In Weiterbildung der Erfindung ist an die Vorderwange wenigstens ein abgewinkelter Rastflügel angeformt, in dem die Nut eingebracht ist. Hierdurch ist die Ausbildung der Rastaufnahme durch einen einfachen Stanzbiegevorgang ermöglicht, wodurch die Herstellung vereinfacht ist.

In Ausgestaltung der Erfindung ist die Vorderwange mit einer Schräge versehen, die in der Nut mündet. Hierdurch ist ein einfaches Hineingleiten der als Rastelement fungierenden Federspange in die Nut erzielt.

In Ausgestaltung der Erfindung sind an dem Spannhebel benachbart zu dessen Seitenflügeln gegenüberliegend zwei Führungslaschen angeformt, die derart zueinander abgewinkelt sind, dass sie einen Einschub für die Federspange ausbilden. Hierdurch ist eine einfache Montage der Federspange erzielt.

In weiterer Ausgestaltung der Erfindung ist die Federspange aus einem Federdraht durch Umformung hergestellt. Hierdurch ist eine kostengünstige Herstellung erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

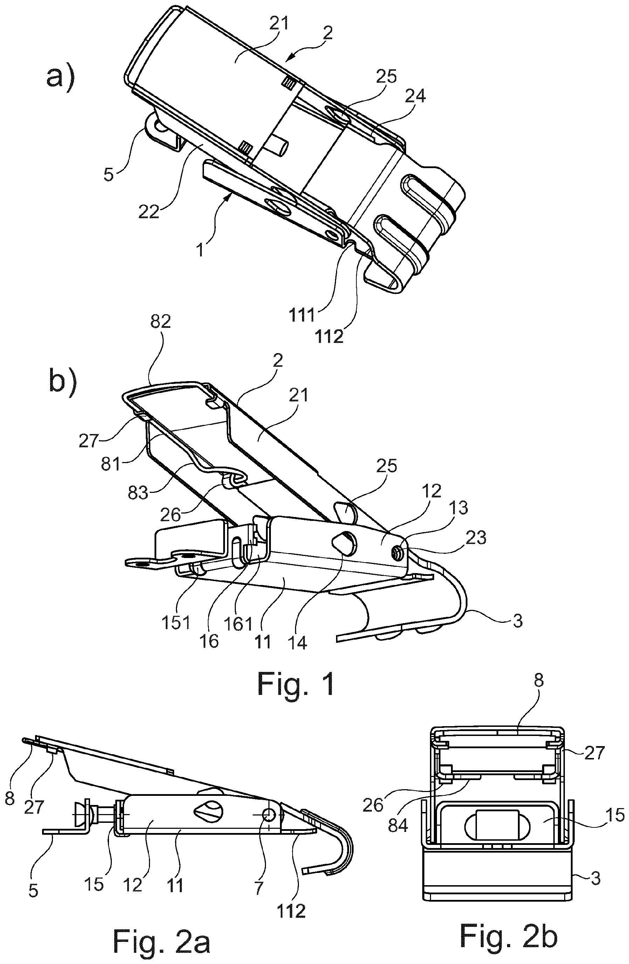

- Figur 1: die schematische Darstellung eines Seitenplanenspanners a) in einer ersten räumlichen Darstellung; b) in einer zweiten räumlichen Darstellung;
- Figur 2: die Darstellung des Federspanners aus Figur 1 a) in der Seitenansicht, b) in der Vorderansicht; c) in der Draufsicht d) im Schnitt A-A;
- Figur 3: die schematische Darstellung der Federspange des Seitenplanenspanners aus Figur 1 a) in der Draufsicht; b) in der Seitenansicht.
- Figur 4: die Darstellung einer Federspange eines Seitenplanenspanners in einer weiteren Ausführungsform.

Der als Ausführungsbeispiel gewählte Seitenplanenspanner besteht im Wesentlichen aus einem Grundkörper 1, in dem ein Spannbügel 2 schwenkbar gelagert ist, der eine Federspange 8 aufnimmt und der wiederum schwenkbar mit einem Haken 3 verbunden ist. An dem Grundkörper 1 ist eine Bördelmutter 4 befestigt, die eine Hammerkopfschraube 6 aufnimmt, die durch die Durchführung eines Planenwinkels 5 geführt ist.

Der Grundkörper 1 ist im Ausführungsbeispiel als Blechstanzbiegeteil ausgebildet. Er besteht im Wesentlichen aus einer Grundplatte 11, an dessen beiden Längsseiten jeweils eine Seitenwange 12 rechtwinklig angestellt ist. In den Seitenwangen 12 ist jeweils eine erste Bohrung 13 sowie eine beabstandet zu dieser angeordnete Verplombungsbohrung 14 eingebracht. Die fluchtend zueinander angeordneten ersten Bohrungen 13 dienen der Aufnahme eines Achsbolzens 7 zur schwenkbaren Lagerung des Spannbügels 2. Die Grundplatte 11 ragt über die Seitenwangen 12 hinaus, wobei angrenzend an die Seitenwangen 12 in die Grundplatte 11 beidseitig ein Freischnitt 111 eingebracht ist. Der hierdurch begrenzte, auskragende Verklemmsteg 112 unterstützt die Verklemmung des S-Schlages der zu spannenden Plane über den Haken 3.

An ihrem dem Verklemmsteg 112 gegenüberliegenden Ende ist an die Grundplatte 11 eine rechtwinklig abgewinkelte Vorderwange 15 angeformt, die mittig mit einer Bohrung versehen ist, durch die der Bördelkragen einer Bördelmutter 4 geführt ist, die sodann verbördelt ist, wodurch die Bördelmutter 4 an der dem Verklemmsteg 112 zugewandten Seite der Vorderwange 15 befestigt ist. Zur Stabilisierung der Vorderwange 15 ist diese mit Sicken 151 versehen. Beidseitig der Vorderwange 15 sind an dieser gegenüberliegend winklig zwei Rastflügel 16 angeformt, die jeweils eine Nut 161 aufweisen. Oberhalb der Nut 161 sind die Rastflügel 16 mit einer Schräge 162 versehen.

Der Spannbügel 2 besteht im Wesentlichen aus einer Deckplatte 21, die an ihren beiden Längsseiten mit rechtwinklig zu dieser angestellten Seitenflügeln 22 versehen ist, welche die Deckplatte 21 in ihrer Länge überragen. In dem die Deckplatte 21 überragenden Abschnitt der Seitenflügel 22 ist in diese jeweils endseitig eine erste Bohrung 23 sowie beabstandet zu dieser eine zweite Bohrung 24 eingebracht. Weiterhin ist wiederum beabstandet zur zweiten Bohrung 24 eine Verplombungsbohrung 25 in den Seitenflügeln 22 angeordnet. An ihrer der Verplombungsbohrung 25 zugewandten Seite sind in die Deckplatte 21 gegenüberliegend zwei nach innen gerichtete Ösen 26 zur Aufnahme der freien Enden der Schenkel 81 der Federspange 8 ausgeformt. Weiterhin sind an die Deckplatte 21 an ihrer den Ösen gegenüberliegenden Seite zwei gegenüberliegend angeordnete Führungslaschen 27 angeformt, die parallel zur Innenseite der Deckplatte 21 verlaufend abgewinkelt sind, wodurch ein Einschub gebildet ist.

Der Haken 3 ist im Wesentlichen in Form eines gekrümmten Blechstreifens ausgebildet, der an einem Ende in einen Flanschabschnitt 31 übergeht. Der Flanschabschnitt 31 ist im Wesentlichen eben ausgebildet und an seinen Längsseiten mit rechtwinklig nach innen angestellten Ösen versehen, über die der Haken 3 schwenkbar mit dem Spannbügel 2 verbunden ist. Zur Stabilisierung des Hakens 3 ist dieser an der Außenseite seines gekrümmten Bereichs mit Sicken 32 versehen.

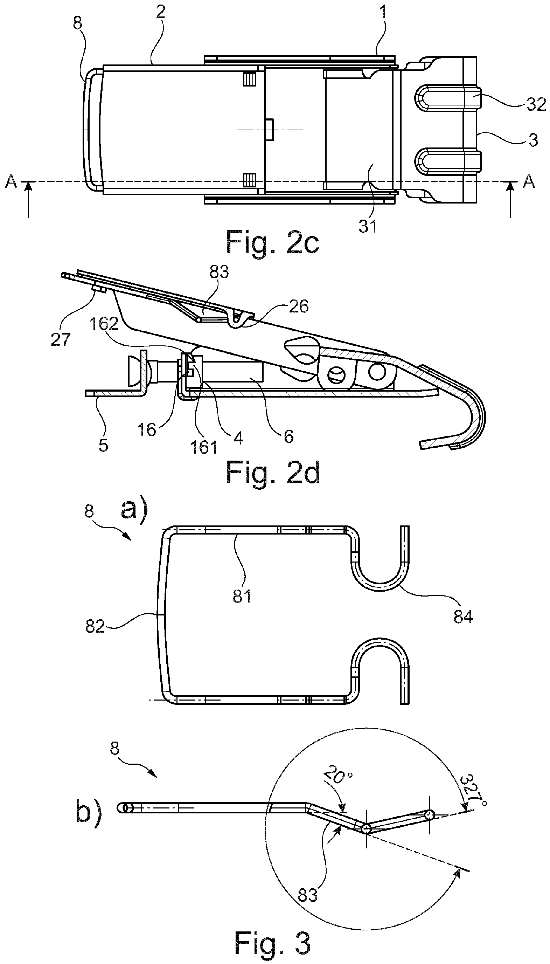

Die Federspange 8 ist in Figur 3 gezeigt. Sie ist im Ausführungsbeispiel aus einem Federstahldraht mittels eines Umformprozesses hergestellt und weist zwei gegenüberliegend angeordnete Schenkel 81 auf, die über einen nach außen gewölbt ausgebildeten Querbügel 82 verbunden sind. Die beiden Schenkel 81 sind gegenüberliegend mit einer Abwinklung 83 versehen, die im Ausführungsbeispiel mit dem Schenkel einen Winkel von 20° begrenzt. An die Abwinklung 83 der Schenkel 81 schließt sich jeweils eine in Richtung des gegenüberliegenden Schenkels 81 gerichtete U-förmige Ausformung 84 an, die im Ausführungsbeispiel mit der Abwinklung 83 einen Winkel von 33° einschließt.

Der Spannbügel 2 ist derart in dem Grundkörper 1 eingebracht, dass dessen Seitenflügel 22 innen an den Seitenwangen 12 des Grundkörpers 1 anliegen, wobei durch die miteinander fluchtenden ersten Bohrungen 13, 23 der Seitenwangen 12 sowie der Seitenflügel 22 ein Achsbolzen 7 geführt ist. Der Achsbolzen 7 bildet die Schwenkachse, um welche der Spannbügel 2 relativ zum Grundkörper 1 verschwenkbar ist. Alternativ ist auch eine schwenkbare Lagerung über durch die ersten Bohrungen 13, 23 geführte Nieten möglich.

Die Federspange 8 ist mit ihren Schenkeln 81 zwischen die Deckplatte 21 und die Führungslaschen 27 eingeschoben, wobei die freien Enden der U-förmigen Ausformungen 84 der Schenkel 81 in die Ösen 26 der Deckplatte 21 eingreifen. Der nach außen gewölbt ausgebildete Querbügel 82 ragt dabei über die Deckplatte 21 hervor.

Der Spannbügel 2 ist derart in dem Grundkörper 1 positioniert, dass bei einem Verschwenken des Spannbügels 2 in Richtung der Vorderwange 15 (Schließrichtung) die U-förmigen Ausformungen 84 der an dem Spannbügel 2 befestigten Federspange 8 entlang der Schrägen 162 der Rastflügel 16 gleiten und in die Nuten 161 vorgespannt eingreifen. Dabei fluchten die Verplombungsbohrungen 14, 25 vom Grundkörper und Spannbügel, sodass ein Zollverschluss ermöglicht ist. Der Haken 3 ist derart zwischen den Seitenflügeln 22 des Spannbügels 2 angeordnet, dass dessen Ösen mit den zweiten Bohrungen 24 der Seitenflügel 22 fluchten, wobei durch diese ein weiterer Achsbolzen 7 geführt ist, über den der Haken 3 relativ zum Spannbügel 2 verschwenkbar gelagert ist. Durch die Bohrung der Vorderwange 15 hindurch ist eine Hammerkopfschraube 6 in die Bördelmutter 4 eingeschraubt, die zuvor durch die Durchführung des Planenwinkels 5 hindurchgeführt ist.

Der Spannbügel 2 ist in seiner geschlossenen Position über die U-förmigen Ausformungen 84 der Federspange 8, die in die Nuten 161 der Rastflügel 16 der Vorderwange 15 eingreifen, fixiert, sodass ein selbsttätiges Öffnen zuverlässig verhindert ist. Durch einen Druck auf den gewölbten Querbügel 82 der Federspange 8 können die U-förmigen Ausformungen 84, die endseitig von den Ösen 26 der Deckplatte 21 des Spannbügels 2 aufgenommen sind, zusammengedrückt werden, wodurch diese aus den Nuten 161 herausbewegt werden. Ein einfaches Verschwenken des Spannbügels in eine Öffnungsstellung ist nun ermöglicht.

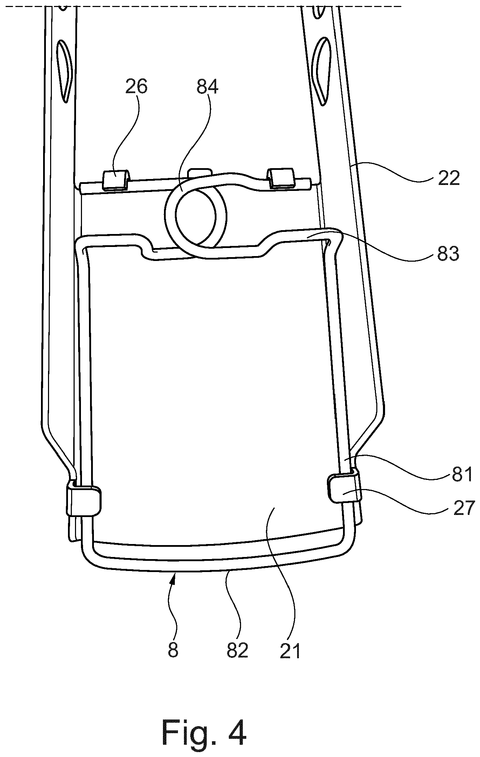

Im Ausführungsbeispiel gemäß Figur 4 ist eine alternative Ausgestaltung der Federspange 8 angeordnet. Hierbei sind die Abwinklungen 83 der Schenkel U-förmig ausgebildet und im Wesentlichen rechtwinklig abgewinkelt an die Schenkel angestellt. An die Abwinklungen 83 schließen sich ebenfalls rechtwinklig angestellt U-förmige Ausformungen 84 an, die auf derselben Ebene wie die Schenkel 81 der Federspange 8 angeordnet sind. Die freien Enden der U-förmigen Ausformungen 84 greifen in an der Deckplatte 21 angeformte Ösen 26 ein.

Bei einem Verschwenken des Spannbügels 2 in Richtung der Vorderwange 15 (Schließrichtung) gleiten die die U-förmigen Abwinklungen 83 der an dem Spannbügel 2 befestigten Federspange 8 entlang der Schrägen 162 der Rastflügel 16 und greifen in die Nuten 161 vorgespannt ein. Die U-förmigen Ausformungen 84 bilden Federelemente aus, die bei Betätigung der Federspange 8 durch Druck auf den Querbügel 82 vorgespannt werden und so eine selbsttätige Rückbewegung der Federspange 8 in ihre Ausgangslage nach Betätigung bewirken.

## Patentansprüche

1. Seitenplanenspanner, umfassend einen zwei parallele Seitenwangen (12) aufweisenden Grundkörper (1), einen als einarmigen Hebel ausgebildeten Spannbügel (2), der um eine zwischen den Seitenwangen (12) des Grundkörpers (1) orthogonal zu diesen verlaufende erste Schwenkachse schwenkbar gelagert ist, sowie ein Hakenteil (3) zum Hintergreifen eines gegenüber der zu spannenden Plane als Widerlager dienenden ortsfesten Halteelements, das um eine zwischen den Seitenwangen (12) verlaufende, parallel zur ersten Schwenkachse verlaufenden zweiten Schwenkachse schwenkbar gelagert ist, wobei an dem Spannbügel (2) wenigstens ein erstes Rastelement angeordnet ist, das in Verschlussstellung des Spannbügels (2) mit einem an dem Grundkörper (1) angeordneten zweiten Rastelement verrastbar ist, **dadurch gekennzeichnet, dass** wenigstens ein Rastelement durch eine an dem Spannbügel (2)angeordnete Federspange (8) gebildet ist, die in wenigstens eine an den Grundkörper (1) angeordnete Rastaufnahme einrastbar ist, wobei an dem Grundkörper (1) eine Vorderwange (15) zur Aufnahme eines Befestigungsmittels zur Verbindung mit einer Plane angeordnet ist und wenigstens ein zweites, als Rastaufnahme ausgebildetes Rastelement durch eine an der Vorderwange (15) angeordnete Nut (161) gebildet ist.

2. Seitenplanenspanner nach Anspruch 1, **dadurch gekennzeichnet, dass** die Federspange (8) mit dem Spannbügel (2) lösbar verbunden ist.

3. Seitenplanenspanner nach Anspruch 1 oder 2, **dadurch gekennzeichnet, dass** die Federspange (8) an ihren beiden Schenkeln (81) eine U-förmige Ausformung (84) aufweist, die jeweils mit einer an dem Grundkörper (1) angeordneten Rastaufnahme verrastbar ist.

4. Seitenplanenspanner nach Anspruch 3, **dadurch gekennzeichnet, dass** die freien Enden der U-förmigen Ausformungen (84) jeweils in eine an dem Spannbügel (2) angeordnete Öse (26) eingreifen.

5. Seitenplanenspanner nach Anspruch 3 oder 4, **dadurch gekennzeichnet, dass** der die beiden Schenkel (81) der Federspange (8) verbindende Querbügel (82) nach außen gewölbt ausgebildet ist.

6. Seitenplanenspanner nach einem der Ansprüche 3 bis 5, **dadurch gekennzeichnet, dass** die U-förmigen Ausformungen (84) jeweils durch eine Abwinklung (83) mit einem Schenkel (81) der Federspange (8) verbunden ist.

7. Seitenplanenspanner nach Anspruch 6, **dadurch gekennzeichnet, dass** die Abwinklung (83) zu dem Schenkel (81) einen Winkel von zwischen 15° und 25°, bevorzugt einen Winkel von zwischen 17° und 23 ° begrenzt.

8. Seitenplanenspanner nach Anspruch 6, **dadurch gekennzeichnet, dass** die Abwinklung (83) U-förmig ausgebildet und an dem Schenkel (81) im Wesentlichen rechtwinklig angestellt ist.

9. Seitenplanenspanner nach Anspruch 8, **dadurch gekennzeichnet, dass** an die Vorderwange wenigstens ein abgewinkelter Rastflügel (16) angeformt ist, in dem die Nut (161) eingebracht ist.

10. Seitenplanenspanner nach Anspruch 1 oder 9, **dadurch gekennzeichnet, dass** die Vorderwange (15) mit einer Schräge (162) versehen ist, die in der Nut (161) mündet.

11. Seitenplanenspanner nach einem der Ansprüche 2 bis 10, **dadurch gekennzeichnet, dass** an dem Spannhebel (2) benachbart zu dessen Seitenflügeln (22) gegenüberliegend zwei Führungslaschen (27) angeformt sind, die derart zueinander abgewinkelt sind, dass sie einen Einschub für die Federspange (8) ausbilden.

12. Seitenplanenspanner nach einem der vorgenannten Ansprüche, **dadurch gekennzeichnet, dass** die Federspange (8) aus einem Federdraht mittels Umformung hergestellt ist.

## Claims

1. Side tarpaulin tensioner comprising a base body (1) having two parallel side cheeks (12), a tensioning bracket (2) designed as a single-arm lever, which is pivotably mounted about a first pivot axis extending between the side cheeks (12) of the base body (1) orthogonally thereto, as well as a hook part (3) for engaging behind a stationary holding element serving as an abutment with respect to the tarpaulin to be tensioned, which holding element is pivotably mounted about a second pivot axis extending between the side cheeks (12) parallel to the first pivot axis, wherein at least one first latching element is arranged on the tensioning bracket (2), which can be latched, in the closed position of the tensioning bracket (2), with a second latching element arranged on the base body (1), **characterised in that** at least one latching element is formed by a spring clip (8) arranged on the tensioning bracket (2), which can be latched in at least one latching receptacle arranged on the base body (1), wherein a front cheek (15) for receiving a fastener for connection to a tarpaulin is arranged on the base body (1) and at least one second latching element designed as a latching receptacle is formed by a groove (161) arranged on the front cheek (15).

2. Side tarpaulin tensioner according to claim 1, **characterised in that** the spring clip (8) is detachably connected to the tensioning bracket (2).

3. Side tarpaulin tensioner according to claim 1 or 2, **characterised in that** the spring clip (8) has a U-shaped formation (84) on its two legs (81), which can be latched in each case with a latching receptacle arranged on the base body (1).

4. Side tarpaulin tensioner according to claim 3, **characterised in that** the free ends of the U-shaped formations (84) each engage in an eyelet (26) arranged on the tensioning bracket (2).

5. Side tarpaulin tensioner according to claim 3 or 4, **characterised in that** the crossbar (82) connecting the two legs (81) of the spring clip (8) is curved outwards.

6. Side tarpaulin tensioner according to one of claims 3 to 5, **characterised in that** the U-shaped formations (84) are each connected by an angled portion (83) to a leg (81) of the spring clip (8).

7. Side tarpaulin tensioner according to claim 6, **characterised in that** the angled portion (83) delimits an angle of between 15° and 25°, preferably an angle of between 17° and 23° to the leg (81).

8. Side tarpaulin tensioner according to claim 6, **characterised in that** the angled portion (83) is U-shaped and is substantially set at right angles to the leg (81).

9. Side tarpaulin tensioner according to claim 8, **characterised in that** at least one angled latching wing (16) is moulded on the front cheek, in which the groove (161) is inserted.

10. Side tarpaulin tensioner according to claim 1 or 9, **characterised in that** the front cheek (15) is provided with a slope (162), which opens into the groove (161).

11. Side tarpaulin tensioner according to one of claims 2 to 10, **characterised in that** two guide tabs (27) are moulded on the tensioning bracket (2) adjacent to its side wings (22) opposite each other, which are angled towards each other in such a manner that they form an insertion for the spring clip (8).

12. Side tarpaulin tensioner according to one of the previous claims, **characterised in that** the spring clip (8) is made of a spring wire by means of forming.

## Revendications

1. Tendeur pour bâches latérales, comprenant un corps de base (1) qui présente deux bords relevés latéraux (12) parallèles, un étrier tendeur (2) configuré en simple bras de levier, étrier tendeur qui se trouve en appui pivotant autour d'un premier axe de pivotement dont le tracé est perpendiculaire aux bords relevés latéraux (12) du corps de base (1), ainsi qu'une pièce crochet (3) pénétrant derrière un élément de retenue à demeure servant de palier antagoniste par rapport à la bâche à tendre, élément de retenue qui se trouve en appui pivotant autour d'un deuxième axe de pivotement dont le tracé entre les bords relevés latéraux (12) est parallèle au premier axe de pivotement, sachant que contre l'étrier tendeur (2) est disposé au moins un premier élément de crantage qui, en position fermée de l'étrier tendeur (2), peut encranter contre un second élément de crantage disposé contre le corps de base (1), **caractérisé en ce qu'**au moins un élément de crantage est formé par une tige ressort (8) disposée contre l'étrier tendeur (2), tige ressort qui peut encranter dans au moins un logement de crantage disposé contre le corps de base (1), sachant que contre le corps de base (1) est disposé un bord relevé avant (15) servant à recevoir un moyen de fixation pour établir la liaison avec une bâche, et qu'au moins un second élément de crantage en forme de logement de cran, est formé par une gorge (161) disposée contre le bord relevé avant (15).

2. Tendeur pour bâches latérales selon la revendication 1, **caractérisé en ce que** la tige ressort (8) est reliée de façon détachable à l'étrier tendeur (2).

3. Tendeur pour bâches latérales selon la revendication 1 ou 2, **caractérisé en ce que** la tige ressort (8) présente, contre ses deux branches (81), une géométrie en U (84) pouvant respectivement encranter contre un logement de crantage disposé contre le corps de base (1).

4. Tendeur pour bâches latérales selon la revendication 3, **caractérisé en ce que** les extrémités libres des géométries en U (84) pénètrent respectivement dans un œillet (26) disposé contre l'étrier tendeur (2).

5. Tendeur pour bâches latérales selon la revendication 3 ou 4, **caractérisé en ce que** l'étrier transversal (82) reliant les deux branches (81) de la tige ressort (8) est configuré bombé vers l'extérieur.

6. Tendeur pour bâches latérales selon l'une des revendications 3 à 5, **caractérisé en ce que** les géométries en U (84) sont reliés respectivement par un coude (83) avec une branche (81) de la tige ressort (8).

7. Tendeur pour bâches latérales selon la revendication 6, **caractérisé en ce que** le coude (83) de liaison avec la branche (81) délimite un angle compris entre 15° et 25°, de préférence un angle compris entre 17° et 23°.

8. Tendeur pour bâches latérales selon la revendication 6, **caractérisé en ce que** le coude (83) est configuré en U et qu'il est appliqué essentiellement de façon perpendiculaire contre la branche (81).

9. Tendeur pour bâches latérales selon la revendication 8, **caractérisé en ce qu'**est modelé contre le bord relevé avant au moins une aile de crantage (16) coudée dans laquelle a été ménagée la gorge (161).

10. Tendeur pour bâches latérales selon la revendication 1 ou 9, **caractérisé en ce que** le bord relevé avant (15) est muni d'un biseau (162) débouchant dans la gorge (161).

11. Tendeur pour bâches latérales selon l'une des revendications 2 à 10, **caractérisé en ce que** contre le levier tendeur (2), au voisinage de ses ailes latérales (22), sont modelées deux pattes de guidage (27) se faisant face, coudées l'une vers l'autre de sorte à former un tiroir d'insertion pour la tige ressort (8).

12. Tendeur pour bâches latérales selon l'une des revendications précédentes, **caractérisé en ce que** la tige ressort (8) est fabriquée à partir d'un fil ressort en recourant à une déformation.
